# EUROPEAN PATENT SPECIFICATION

(11) **EP 4 615 060 B1**
(45) Date of publication and mention of the grant of the patent: **03.12.2025**
(21) Application number: 24162474.1
(22) Date of filing: 08.03.2024
(51) Int. Cl.: H04W 48/16, H04W 48/20, H04W 60/00, H04W 48/10

(54) **METHODS, COMPUTER PROGRAMS, AND APPARATUSES FOR MANAGING AN IDLE STATE OF USER EQUIPMENT IN A MOBILE COMMUNICATION SYSTEM, USER EQUIPMENT, BASE STATION AND MOBILE COMMUNICATION SYSTEM**
VERFAHREN, COMPUTERPROGRAMME UND VORRICHTUNGEN ZUR VERWALTUNG EINES RUHEZUSTANDES EINES BENUTZERGERÄTS IN EINEM MOBILKOMMUNIKATIONSSYSTEM, BENUTZERGERÄT, BASISSTATION UND MOBILKOMMUNIKATIONSSYSTEM
PROCÉDÉS, PROGRAMMES INFORMATIQUES ET APPAREILS DE GESTION D'UN ÉTAT DE REPOS D'UN ÉQUIPEMENT UTILISATEUR DANS UN SYSTÈME DE COMMUNICATION MOBILE, ÉQUIPEMENT UTILISATEUR, STATION DE BASE ET SYSTÈME DE COMMUNICATION MOBILE

(43) Date of publication of application: 10.09.2025
(73) Proprietor: Deutsche Telekom AG, 53113 Bonn (DE)
(72) Inventor: KLATT, Axel, 50999 Köln (DE)
(74) Representative: 2SPL Patentanwälte PartG mbB

(56) References cited:
- US-A1- 2017 238 302
- US-A1- 2021 367 799
- "3rd Generation Partnership Project; Technical Specification Group Radio Access Network; NR; User Equipment (UE) procedures in Idle mode and RRC Inactive state (Release 18)", 16 January 2024 (2024-01-16), XP052595246, Retrieved from the Internet <URL:https://ftp.3gpp.org/tsg_ran/WG2_RL2/Specifications/202312_final_specs_after_RAN_102/38304-i00.zip 38304-i00.docx> [retrieved on 20240116]
- QUALCOMM INCORPORATED: "Standalone eMBMS carrier", vol. RAN WG1, no. Nanjing, China; 20160523 - 20160527, 14 May 2016 (2016-05-14), XP051089979, Retrieved from the Internet <URL:http://www.3gpp.org/ftp/tsg_ran/WG1_RL1/TSGR1_85/Docs/> [retrieved on 20160514]

## Description

### Field

Examples relate to methods, computer programs, and apparatuses for managing an idle state of a user equipment in a mobile communication system, a user equipment, a base station and a mobile communication system, more particularly, but not exclusively, to a concept for managing a state of user equipment in a mobile communication system to receive a reduced service set with enhance coverage in idle state.

### Background

Mobile communication systems have revolutionized the way we connect with others and access information on the go. These systems enable users to communicate through voice calls, text messages, and internet services using mobile devices such as smartphones and tablets. With the advancements in technology, mobile communication systems have become faster, more reliable, and accessible to a larger population worldwide.

One of the key features of mobile communication systems is their ability to provide seamless connectivity regardless of geographical location. Whether you are traveling, working remotely, or simply on the move, mobile networks ensure that you stay connected with your friends, family, and colleagues. This level of connectivity has greatly enhanced communication and collaboration, enabling businesses to operate efficiently and individuals to stay in touch with their loved ones at all times.

Moreover, mobile communication systems have also played a significant role in driving economic growth and development. Through mobile banking, e-commerce, and online services, individuals can access financial services, make purchases, and carry out transactions easily using their mobile devices. This has not only improved convenience for consumers but has also opened up new opportunities for businesses to reach a wider audience and expand their market reach. As mobile communication systems continue to evolve, we can expect further innovations that will further transform the way we communicate and conduct business in the digital age.

Mobile communication networks such as public land mobile networks (PLMNs) are typically realized as cellular mobile communication networks. Such cellular systems are known conforming to different mobile communication standards or radio access technologies, which are also referred to as generations of mobile communication systems or standards. Examples are 2G/3G/4G/5G (G indicates Generation) radio access technologies and typically comprise cells of one or more radio access technologies. Such mobile communication networks that are purely or predominantly based on terrestrial infrastructures of the radio access network (terrestrial networks or TN-networks) are typically organized throughout a country (or a part of or a region within a country) in a repeating pattern of typically stationary cells (and associated base station entities), which typically belong to a mobile network operator (MNO).

In a typical coverage area of a mobile communication system there are regions of different service quality, which can be due to radio conditions, network load, grade of reflections, etc. Hence, service quality varies based on user location, network load and other parameters. For example, there can also be regions or areas in which no coverage is possible by one mobile communication system (coverage hole) but by another, which is, for example, operated by another MNO.

In addition to terrestrial mobile communication networks, it is also known to provide communication services using non-terrestrial networks, i.e. mobile communication networks that use, at least partly, non-terrestrial infrastructures of the radio access network, especially using satellites and/or high-altitude platforms. Especially in case of using satellites, e.g. non-geo-stationary satellites, satellites move relative to the earth's surface and therefore coverage conditions are subject to change even in a scenario, which is static from a ground perspective. Furthermore, because of the moving satellites, a serving satellite changes for a specific region on the ground.

Because of the changing nature of service availability in a mobile communication system there are concepts that allow a user to use emergency service of a mobile communication system it is not subscribed to. At least in some countries this may be mandated by the legislator.

Document US 2021/0367799 A1 outlines that standalone MBSFN (multicast broadcast single frequency network) cells may provide an improved user experience for an individual with a non-legacy UE since the bandwidth of that cell is mostly allocated to broadcasting streaming services. However, an individual with a legacy UE may be able to detect cell acquisition information associated with a standalone MBSFN cell but not to acquire standalone MBSFN cells. In order to solve this problem, the document provides various UE avoidance schemes that enable non-legacy UEs to acquire a standalone MBSFN cell and prevents legacy UEs rom trying to acquire a standalone MBSFN only cell. The apparatus may receive cell acquisition information associated with an eMBMS standalone cell. The apparatus may detect a UE avoidance scheme based on a characteristic associated with the cell acquisition information. The apparatus may perform cell acquisition with the eMBMS standalone cell based on the characteristic.

Document US 2017/0238302 A1 describes a Machine-to-Machine (M2M) terminal, which is configured to receive a first notification from a base station and to transmit a second notification to the base station when establishing a radio connection with the base station after reception of the first notification or while performing a procedure for establishing a bearer between the M2M terminal and a core network after reception of the first notification. The first notification indicates whether specific coverage enhancement processing is supported in a cell of the base station in which the M2M terminal is located. The second notification indicates that the specific coverage enhancement processing is required or being executed by the M2M terminal. It is thus possible to provide an improvement to allow the M2M terminal to determine necessity of special coverage enhancement processing for M2M terminals.

### Summary

It is a finding of the present disclosure that there are further possibilities to tread a user in idle mode. For example, a notification channel may be used, which is meant to provide the user with a basic notification but not with regular or full cellular service. For example, such a notification channel may use more robust signal processing, e.g. coding and modulation, than the conventionally known channels and, hence, would have a better coverage of, e.g., up to 18 dB over these normal channels. For example, a notification channel may be used to notify a user that an incoming call was received but the user equipment has not responded to a paging procedure. It might additionally be used in case that a downlink data transmission was scheduled for the considered user equipment, but the user equipment did not (finally) receive the related message or notification. It is a further finding that user equipment, UE, can be kept in different states even though it is idle. For example, the UE can be registered or camped on a regular cell for regular service. However, if a signal quality of such a cell does not suffice to provide regular services instead of camping on a cell of another operator for emergency services only, the UE may be camped on a regular cell with reduced services, e.g. for reception of a notification channel with extended coverage.

The invention is defined by the appended set of claims.

Examples therefore provide a method for managing an idle state of a user equipment, UE, in an environment covered by a plurality of mobile communication systems. The method comprises conducting a cell selection measurement to obtain one or more cell specific quality measurement results. If there is a cell specific quality measurement above a first threshold and from a first cell the UE is allowed to register at, the method comprises registering the UE at said first cell. Else, if there is a cell specific quality measurement above a second threshold, which is lower than the first threshold, and from a second cell the UE is allowed to register at, the method comprises registering the UE at said second cell with a reduced service set. Else, if there is a cell specific quality measurement above a third threshold and from a third cell the UE is not allowed to register normally at, the method comprises registering the UE at said third cell with an emergency service set. Else the method comprises repeating the conducting of cell selection measurements to obtain one or more cell specific quality measurement results. Therewith the UE can be registered with a reduced service set at a cell the UE is allowed to register with rather than registering the UE for an emergency service set at a cell, the UE is not allowed to register normally at.

The reduced service set comprises receiving a notification channel from the cell the UE is registered at. The notification channel indicates that a paging of the UE was missed and/or where regular service can be obtained. Therewith, notifications can be transmitted to the UE from a regular cell even if the UE is not in full or regular coverage. The coverage of a regular cell may therefore be extended, be it for the notification channel only.

In some examples the method comprises repeating the conducting of cell selection measurements to obtain one or more cell specific quality measurement results also in case the UE is registered with the reduced service set. Examples may enable the UE to find a cell, which can provide full service, even if the UE is registered for the reduced service set only. In case the UE is registered with the reduced service set and an emergency call occurs at the UE, the method may comprise, if there is a cell specific quality measurement above the third threshold and from the third cell the UE is not allowed to register normally at, registering the UE at said third cell with an emergency service set and conducting the emergency call. Hence, being registered with the reduced service set might not hinder the UE to register with another cell that can provide the emergency service set in case an emergency call occurs. Of course, the UE may as well register at a cell with normal service provision if available to conduct the emergency call.

For example, the first cell the UE is allowed to register at is a cell of the UE's home public land mobile network, HPLMN, or a cell of a PLMN the UE is allowed to roam to. The first cell the UE is allowed to register at may be a suitable cell according to the 3rd Generation Partnership Project Technical Specification 3GPP TS 38.304. For example, the third cell the UE is not allowed to register at may be an acceptable cell according to the 3rd Generation Partnership Project Technical Specification 3GPP TS 38.304. Furthermore, the second cell the UE is allowed to register at may be a notification cell of the UE's home public land mobile network, HPLMN, or a cell of a PLMN the UE is allowed to roam to. Examples may hence introduce a state with reduced service set into the state machine for idle mode of 3GPP. For example, the notification cell is a cell on which the UE may camp to obtain a notification service in terms of reception of a notification channel.

In further examples the method may further comprise receiving, at the UE, information on a configuration of a notification channel from at least one cell of a mobile communication system. Examples may enable a mobile communication system to inform a UE of the configuration and/or availability of a notification channel. Examples therefore also provide a method for a base station of a mobile communication system. The method comprises broadcasting configuration information about a notification channel used for reduced services with extended coverage and registering user equipment for receiving the notification channel. The method for the base station further comprises communicating with the UE via the notification channel.

A further example is a computer program having a program code for performing one of the methods described herein, when the computer program is executed on a computer, a processor, or a programmable hardware component.

Yet another example is an apparatus for user equipment of a mobile communication system. The apparatus comprises one or more interfaces configured to communicate in the mobile communication system and one or more processing devices configured to perform one of the methods for a UE as described herein.

An apparatus for a base station of a mobile communication system is another example. The apparatus comprises one or more interfaces configured to communicate in the mobile communication system and one or more processing devices configured to perform a method for a base station as described herein.

A mobile communication system comprising user equipment with an apparatus according to the above description and a base station with an apparatus according to the above description is another example.

### Brief description of the Figures

Some examples of apparatuses, methods, and/or computer programs will be described in the following by way of example only, and with reference to the accompanying figures, in which
Fig. 1 shows a block diagram of an example of a method for managing an idle state of a user equipment;
Fig. 2 shows a block diagram of an example of a method for a base station of a mobile communication system;
Fig. 3 shows block diagrams of examples of an apparatus for managing an idle state of a user equipment, a UE, an apparatus for a base station, a base stion, and a mobile communication system;
Fig. 4 shows a block diagram of a state machine for an idle mode UE; and
Fig. 5 shows a block diagram of an example of a state machine for an idle mode UE.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

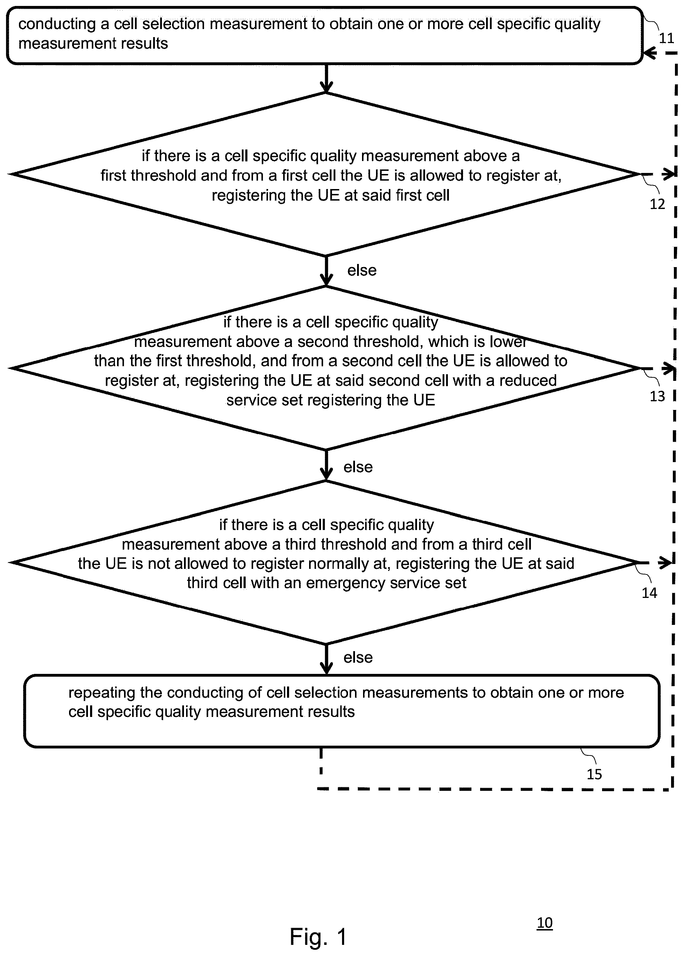

Fig. 1 shows a block diagram of an example of a method 10 for managing an idle state of a user equipment, UE. The method 10 for managing the idle state of the UE in an environment covered by a plurality of mobile communication systems comprises conducting 11 a cell selection measurement to obtain one or more cell specific quality measurement results. If there is a cell specific quality measurement above a first threshold and from a first cell the UE is allowed to register at, the method comprises registering 12 the UE at said first cell. Else, if there is a cell specific quality measurement above a second threshold, which is lower than the first threshold, and from a second cell the UE is allowed to register at, the method comprises registering 13 the UE at said second cell with a reduced service set. Else, if there is a cell specific quality measurement above a third threshold and from a third cell the UE is not allowed to register normally at, the method 10 comprises registering the UE at said third cell with an emergency service set. Else, the method 10 comprises repeating the conducting of cell selection measurements to obtain one or more cell specific quality measurement results. In Fig. 1 the dotted arrows indicate that the method may optionally be repeated in a loop, because a UE may be subject to changing radio conditions and preference may be to find or keep staying a first cell, which allows for regular services. This process may also be referred to as cell re-selection as will be detailed subsequently.

In examples, the measurements for cell selection may be any reception quality measurement on which a decision on whether or not to select a cell can be based. There are several indicators that may be used to predict or indicate a reception quality. One example is the reference signal receiving power (RSRP), which is used in 5G networks as defined by the 3rd Generation Partnership Project (3GPP). A cell specific reference signal is transmitted by a base station or nodeB, which may host one or more cells with individual reference signals. At the UE the reference signal can be measured, e.g. in terms of reception power at the UE.

For example, RSRP is the linear average of reference signal power (in Watts) across the specified bandwidth. A UE may measure the RSRP for cell selection, reselection and handover. Further details on a formal definition of RSRP can be found in 3GPP Technical specification (TS) 36.214. For RSRP determination cell-specific reference signals R0 according 3GPP TS 36.211 shall be used. If the UE can reliably detect that R1 is available, it may use R1 in addition to R0 to determine RSRP. However, in examples the measured reception quality per cell may be any measure that enables an evaluation of a data reception quality in said cell.

RSRP is only one quality measure as defined by 3GPP. There are multiple other quality measures that could be used reception quality measure. Examples are received signal code power (RSCP), reference signal received quality (RSRQ), reference signal signal-to-interference ratio (RS SIR), reference signal signal-to-interference-and-noise ratio (RS SINR), reference signal signal-to-noise ratio (RS SNR), etc. The term reference signal indicates that the signal used for conducting such a measurement is known at the mobile terminal or UE. There are other terms for signal signals such a pilot signal, pilot symbol, pilot sequence, reference symbol, reference sequence, training signal, training symbol, training sequence, etc. In examples, the thresholds, i.e. the first, second, and third thresholds may be given as reception quality threshold inline with one of the above measures or indicators. In examples, the second threshold, which is used to evaluate the quality measurement and which is lower than the first threshold, indicates a lower reception quality of the respective cell. The first threshold may be chosen in a way that regular services with regular quality can be provided to UE based on this respective reception quality. The second threshold may indicate that only reduced services with reduce quality (e.g. reduced data rate) can be provided. The third threshold, which us used to decide on a cell for emergency service only in case the others are not available may be chosen in a way that an emergency call can be conducted with sufficient quality.

In examples the reduced service set may comprise receiving a notification channel from the cell the UE is registered at. The notification channel indicates that a paging of the UE was missed and/or where regular service can be obtained. Information on whether a cell provides a notification channel and how or where it can be received may be provided by such a cell, e.g. in terms of broadcast system information.

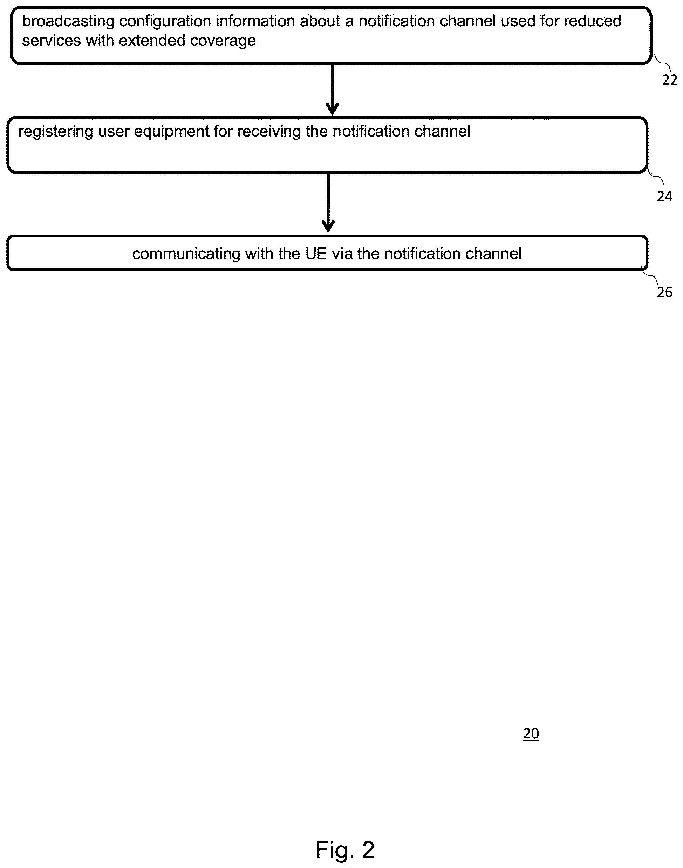

Fig. 2 shows a block diagram of an example of a method 20 for a base station of a mobile communication system. The method 20 for the base station of a mobile communication system comprises broadcasting 22 configuration information about a notification channel used for reduced services with extended coverage and registering 24 user equipment for receiving the notification channel. The method 20 further comprises communicating 26 with the UE via the notification channel.

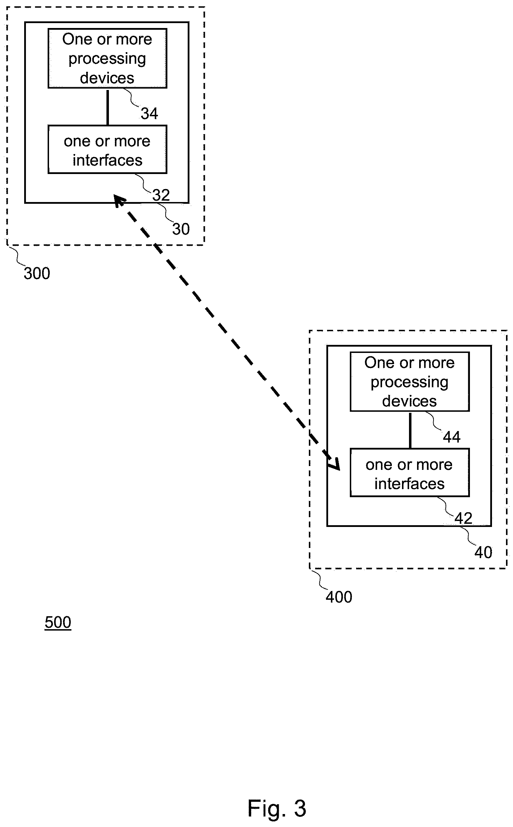

Fig. 3 shows block diagrams of examples of an apparatus 30 for managing an idle state of a UE 300, an apparatus 40 for a base station 400 and a mobile communication system 500.

The apparatus 30 for the user equipment 300 of the mobile communication system 500 comprises one or more interfaces 32, which are configured to communicate in the mobile communication system 500. The one or more interfaces 32 are coupled to one or more processing devices 34, which are configured to perform one of the methods for the UE as described herein.

The apparatus 40 for the base station 400 of the mobile communication system 500 comprises one or more interfaces 42, which are configured to communicate in the mobile communication system 500. The one or more interfaces 42 are coupled to one or more processing devices 44, which are configured to perform one of the methods for the base station 400 as described herein.

Fig. 3 also illustrates the mobile communication system comprising user equipment 300 with an apparatus 30 and the base station 400 with an apparatus 40.

As illustrated in Fig. 3, the respective one or more processing devices 34, 44 are coupled to the respective one or more interfaces 32, 42. The one or more interfaces 32, 42 may correspond to one or more inputs and/or outputs for receiving and/or transmitting information, which may be in digital (bit) values according to a specified code or protocol, within a module, between modules or between modules of different entities. For example, an interface 32, 42 may comprise interface circuitry configured to receive and/or transmit information. In examples an interface 32, 42 may correspond to any means for obtaining, receiving, transmitting or providing analog or digital signals or information, e.g., any connector, contact, pin, register, input port, output port, conductor, lane, etc., which allows providing or obtaining a signal or information. An interface 32, 42 may be configured to communicate (transmit, receive, or both) in a wireless or wireline manner and it may be configured to communicate, i.e., transmit and/or receive signals, information with further internal or external components. The one or more interfaces 32, 42 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 34, 44 may be implemented using one or more processing units, one or more circuitries, any means for processing, such as a processor, a computer or a programmable hardware component being operable with accordingly adapted software. In other words, the described function of the one or more processing devices 34, 44 may as well be implemented in software, which is then executed on one or more programmable hardware components. Such hardware components may comprise a general-purpose processor, a Digital Signal Processor (DSP), a micro-controller, etc.

In examples measurements may be carried out by UEs, mobile terminals, or communication devices, which may communicate in the mobile communication system with the network entity, e.g., one or more cells generated by a base station. For example, the communication device and the network entity may communicate in/via a mobile communication system. The mobile communication system may comprise a plurality of transmission points and/or base stations operable to communicate radio signals with the communication device. In an example, the mobile communication system may comprise the communication device and the network entity.

A network entity, e.g., the network entity, can be located in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity or a base station may correspond to, a NodeB, an eNodeB, an ngNB, a BTS (Base Transceiver Station), an access point, etc.

The mobile communication system may be cellular. The term cell refers to a coverage area of radio services provided by a transmission point, a remote unit, a remote head, a remote radio head, communication device, network entity or a NodeB, an eNodeB, an ngNB, respectively. The terms cell and base station may be used synonymously, a base station may generate multiple cells. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

In general, the communication device is a device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In further examples, the method 10 may comprise repeating the conducting of cell selection measurements to obtain one or more cell specific quality measurement results also in case the UE is registered with the reduced service set. That way, if a regular cell with full service becomes available the UE can register there and obtain full service. In case the UE is registered with the reduced service set and an emergency call occurs at the UE, the method 10 comprises, if there is a cell specific quality measurement above the third threshold and from the third cell the UE is not allowed to register normally at, registering the UE at said third cell with an emergency service set and conducting the emergency call. Therewith, emergency calls are still enabled although the UE is registered for reduced service set only. For example, the first cell the UE is allowed to register at, is a cell of the UE's home public land mobile network, HPLMN, or a cell of a PLMN the UE is allowed to roam to.

Examples may provide a method for an improved idle mode state machine for a notification channel usage in a Public (Land) Mobile Network (PLMN), especially in a Non-Terrestrial Network (NTN). If a notification channel (reduced service set) will be introduced, the known cellular systems IDLE mode state machine does not work any longer. This IDLE mode state machine is basically unchanged from cellular generation to cellular generation from GSM (Global System for Mobile communication) time and well defined in 3GPP Technical Specification (TS) 25./36./38.304 (UMTS/LTE/NR) specifications. In the description of the following example only the TS 38.304-relevant information is used as the proposed modification targets mainly NR technology, especially NR NTN technology.

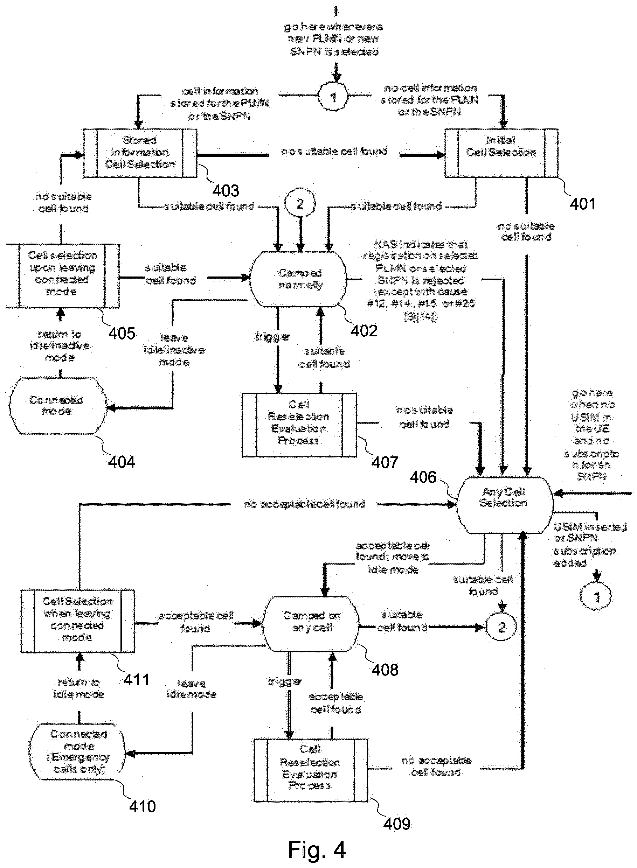

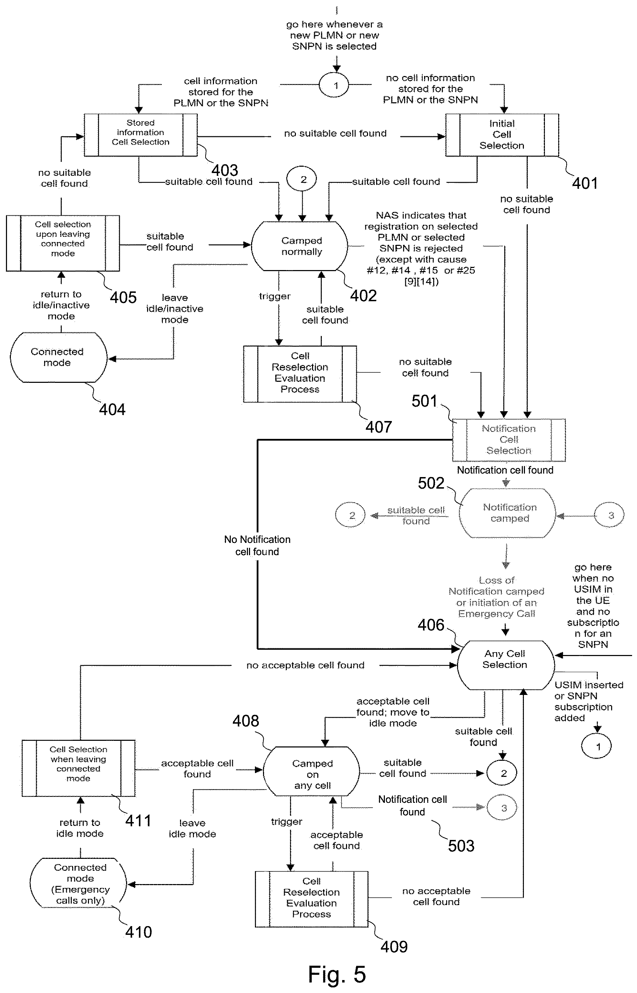

Fig. 4 shows a block diagram of a state machine for an idle mode UE. The state machine shown in Fig. 4 corresponds to Fig. 5.2.2-1 of 3GPP TS 38.304 V18.0.0 (2023-12), which provides full details on the idle states and references relevant other specifications. The diagram in Fig. 4 describes the IDLE mode states (shown in round edged boxes()) and the related processes (shown in rectangular boxes[ ]) and procedures (shown by the arrows<-, ->) for a UE in IDLE mode using a cellular network (NR in this case). The upper part is about camping the UE normally in state "Camped Normally" 402. The process starts at the very top at point (1) whenever a new PLMN or a SNPN (Stand-alone Non-Public Network) is selected.

If no cell information is stored for the PLMN or the SNPN, "Initial Cell Selection" 401 is triggered. In this process cell selection measurements are carried out by the UE and evaluated against a threshold (e.g. RSRP is better than a reception threshold (first, second and third thresholds as outlined above, e.g. Rx-levmin in 3GPP) and potentially other criteria are checked (e.g. if the cell's (minimum) system information is received and can be decoded, if the cell is barred, PLMN ID (IDentification) matches, etc.). If a suitable cell is found (measurement above threshold, criteria are met) the cell is selected in "Camped Normally" 402. In the method 10 as outlined above, the first cell the UE is allowed to register at may hence be a suitable cell according to the 3rd Generation Partnership Project Technical Specification 3GPP TS 38.304.

If no suitable cell is found, the process continues with "Any Cell Selection" 406 shown in the lower part of the diagram. If cell information is stored for the PLMN or the SNPN, the stored information is used for cell selection 403. If a suitable cell is found the UE proceeds to "Camped Normally" 402 and if no suitable cell is found "Initial Cell Selection" 401 is performed as described above. In the "Camped Normally" state 402 the UE attempts to register at the suitable cell. In some cases, such registration may be denied because NAS (Non-Access Stratum) indicates that registration on selected PLMN or selected SNPN is rejected. Details can be found in 3GPP TS 23.122: "NAS functions related to Mobile Station (MS) in RRC_IDLE state" and 3GPP TS 24.501: "Non-Access-Stratum (NAS) protocol for 5G System (5GS); Stage 3". For example, NAS rejects the registration with cause #12, "tracking area not allowed". In this case the process continues to "Any Cell Selection" 406.

In case a service is initiated the UE may leave the "Camped Normally State" 402 and idle/inactive mode to establish connected mode 404 and after the service is terminated, the UE returns to "Cell selection upon leaving connected mode" 405. If a suitable cell is found the UE returns to "camped normally" 402 and if not, the UE proceeds with cell selection based on stored information 403. In "Camped Normally" 402 state the "Cell Reselection Evaluation Process" 407 may be triggered.

If the "Cell Reselection Evaluation Process" 407 does not lead to finding a suitable cell from the RPLMN, the UE goes on to "Any Cell Selection" 406 state and tries to find an acceptable cell - of another PLMN, which is not possible to roam on - to camp there in "Camped on Any Cell" 408 state. In this state, the UE can only perform Emergency calls and receive ETWS (Earthquake and Tsunami Warning System) and CMAS (Commercial Mobile Alert System) notifications. Further details can be found in chapter 4.5 of 3GPP TS 38.304 V18.0.0 (2023-12). The third cell as outlined above with respect to method 10 on which the UE is not allowed to register at may hence be an acceptable cell according to the 3rd Generation Partnership Project Technical Specification 3GPP TS 38.304.

During the "Any Cell Selection" process 406 or if the UE is "Camped on any cell" 408 a suitable cell can be found, and the UE then goes on to "Camped normally" 403 as indicated by the jump mark (2) in Fig. 4. In the "Camped on any cell" 408 state a "Cell Reselection Evaluation Process" 409 may be triggered, and if an acceptable cell is found the UE returns to "Camped on any cell" 408, if not, the process continues with "Any Cell Selection" 406. If idle mode is left (emergency call), the UE can transit to connected mode 410 and upon return to idle mode to "Cell Selection when leaving connected mode" 411. If an acceptable cell is found the UE proceeds to "Camped on any cell" 408, if not the UE proceeds to "Any Cell Selection" 406 as outlined above. "Any cell Selection" 406 is also carried out when no USIM (Universal Subscriber Identity Module) is inserted in the UE and no subscription for an SNPN exists. If an USIM is inserted or an SNPN subscription is added the procedure continues at jump point (1) as indicated in Fig. 4.

The NTN notification channel as outlined above will introduce a new more robust physical channel, which overcomes some restrictions to enhance the coverage area of an NTN cell. This will result into a new level of "cell coverage", where normal service is not possible, not even placing an emergency call, but the UE should "stick" to such a new channel without triggering an "Any Cell Selection" process 406 once the suitable cell of the current NTN RPLMN became unsuitable.

So, in terms of the service levels of cells (see chapter 4.3 and 4.4 in 3GPP TS 38.304 V18.0.0 (2023-12) for more details) a new category of service provided by a cell is introduced by examples:
- Normal service (for public use or non-public use on a suitable cell) aka ("camped normally")
- Notification Service ("camped on a notification channel" - receive notification only introduced by the present example, a stated with reduced service provision)
- Limited service (emergency calls, ETWS and CMAS on an acceptable cell).

Examples may hence add a new state between "camped normally (on a suitable cell)" and "camped in limited service state (on an acceptable cell)", which is illustrated in the revised state diagram in Fig. 5. Fig. 5 shows a block diagram of an example of a state machine for an idle mode UE. The state machine in Fig. 5 shows the same components as outlined above with respect to Fig. 4. In addition, the example of Fig. 5 introduces process "Notification Cell Selection" 501 and the state "Notification Camped" 502. Compared to the state machine in Fig. 4, the example in Fig. 5 carries out the "Notification Cell Selection" 501 and continues to "Notification Camped" 502 if a notification cell is found. The second cell, as outlined above with respect to method 10, on which the UE is allowed to register at is a notification cell of the UE's home public land mobile network, HPLMN, or a cell of a PLMN the UE is allowed to roam to. In this example, the notification cell is a cell on which the UE may camp to obtain a notification service in state "Notification camped" 502.

If in "Notification camped" 502 a suitable cell is found the UE transits to "Camped normally" 402 as indicate by jump mark (2) in Fig. 5. If no notification cell is found the UE proceeds with "Any Cell Selection" 406. If the UE is in "Camped on any cell" 408 and a "Notification cell is found" 503 then the UE changes to "Notification camped" state 502 as indicated by jump mark (3) in Fig. 5. Hence the UE prioritizes "Camped Normally" 402 over "Notification camped" 502 and "Camped on any cell" 408. If no suitable cell is found the UE prioritizes "Notification camped" 502 over "Camped on any cell" 408.

Some of the related changes to the procedures defined in 3GPP TS 38.304 (3GPP TS 38.304 V18.0.0 (2023-12)) are exemplarily outlined here and it is explicitly referenced for further details, abbreviations, and its references to further 3GPP specifications:

[...]

### 4.3 Service types in RRC_IDLE state

This clause defines the level of service that may be provided by the network to a UE in RRC_IDLE state. The following three levels of services are provided while a UE is in RRC_IDLE state:
- Limited service (emergency calls, ETWS and CMAS on an acceptable cell);
- Notification service (receive information of a missed paging or further information where coverage can be regained to get back to camped normally);
- Normal service (for public use or non-public use on a suitable cell);
- Operator service (for operators only on a reserved cell).

### 4.4 Service types in RRC_INACTIVE state

This clause defines the level of service that may be provided by the network to a UE in RRC_INACTIVE state. The following two levels of services are provided while a UE is in RRC_INACTIVE state:
- Normal service (for public use or non-public use on a suitable cell);
- Notification service (receive information of a missed paging or further information where coverage can be regained to get back to camped normally);
- Operator service (for operators only on a reserved cell).

[...]

### 4.5 Cell Categories

The cells are categorised according to which services they offer:

### acceptable cell:

An "acceptable cell" is a cell on which the UE may camp to obtain limited service (originate emergency calls and receive ETWS and CMAS notifications). Such a cell shall fulfil the following requirements, which is the minimum set of requirements to initiate an emergency call and to receive ETWS and CMAS notification in an NR network:
- The cell is not barred, see clause 5.3.1;
- The cell selection criteria are fulfilled, see clause 5.2.3.2.

### notification cell:

A "notification cell" is a cell on which the UE may camp to obtain notification service (receive information of a missed paging or further information where coverage can be regained to get back to camped normally)

### suitable cell:

For UE not operating in SNPN Access Mode, a cell is considered as suitable if the following conditions are fulfilled:
- The cell is part of either the selected PLMN or the registered PLMN or PLMN of the Equivalent PLMN list, and for that PLMN either:
   - The PLMN-ID of that PLMN is broadcast by the cell with no associated CAG-IDs and CAG-only indication in the UE for that PLMN (TS 23.501 [10]) is absent or false (CAG=Closed Access Group);
   - Allowed CAG list in the UE for that PLMN (TS 23.501 [10]) includes a CAG-ID broadcast by the cell for that PLMN;
- The cell selection criteria are fulfilled, see clause 5.2.3.2.

According to the latest information provided by NAS:
- The cell is not barred, see clause 5.3.1;
- The cell is part of at least one TA that is not part of the list of "Forbidden Tracking Areas for Roaming" (TS 22.011 [18]), which belongs to a PLMN that fulfils the first bullet above.

For UE operating in SNPN Access Mode, a cell is considered as suitable if the following conditions are fulfilled:
- The cell is part of the selected SNPN or the registered SNPN or SNPN of the Equivalent SNPN list of the UE;
- The cell selection criteria are fulfilled, see clause 5.2.3.2;

According to the latest information provided by NAS:
- The cell is not barred, see clause 5.3.1;
- The cell is part of at least one TA that is not part of the list of "Forbidden Tracking Areas for Roaming" which belongs to the selected SNPN or the registered SNPN or SNPN of the Equivalent SNPN list of the UE.

### barred cell:

A cell is barred if it is so indicated in the system information, as specified in TS 38.331 [3].

### reserved cell:

A cell is reserved if it is so indicated in system information, as specified in TS 38.331 [3]. Following exception to these definitions are applicable for UEs:
- if a UE has an ongoing emergency call, all acceptable cells of that PLMN/SNPN are treated as suitable for the duration of the emergency call.
- camped on a cell that belongs to a tracking area that is forbidden for regional provision of service; a cell that belongs to a tracking area that is forbidden for regional provision service (TS 23.122 [9], TS 24.501 [14]) is suitable but provides only limited service.
- if the UE in RRC_IDLE fulfils the conditions to support NR sidelink communication/discovery or V2X sidelink communication in limited service state as specified in TS23.287 [16] clause 5.7, the UE may perform NR sidelink communication/discovery or V2X sidelink communication.

NOTE:UE is not required to support manual search and selection of PLMN or CAG or SNPN while in RRC CONNECTED state. The UE may use local release of RRC connection to perform manual search if it is not possible to perform the search while RRC connected.

[...]

Furthermore, examples may introduce a "Notification cell selection state".

This state is applicable for RRC_IDLE and RRC _INACTIVE state. In this state, the UE shall perform to select a notification channel based on previously received notification channel configuration information. If the selection of a notification channel of the current RPLMN is successful, the UE shall camp on that channel and perform the tasks defined for this state.

If the UE found a suitable cell, the UE shall change to that cell and camp normally.

If the UE is unable to find a notification channel of the current RPLMN or lost the previously used notification channel or initiation of an emergency call the UE shall attempt to find an acceptable cell.

The UE, which is not camped on any cell, shall stay in this state.

[...]

Furthermore, examples may introduce a "Camped in Notification state".

This state is applicable for RRC_IDLE and RRC _INACTIVE state.

When camped in notification state, the UE shall perform the following tasks:
- monitor the notification channel of the cell as specified [tbd];
- monitor relevant Notification System Information as specified in TS 38.331 (3GPP TS 38.331: "NR; Radio Resource Control (RRC) - Protocol Specification"). (Hence, the method 10 as described above may comprise receiving, at the UE, information on a configuration of a notification channel from at least one cell of a mobile communication system);
- perform necessary measurements for the notification channel evaluation procedure;
- change to Any Cell Selection in case of initiation of an Emergency Call
- execute the cell reselection evaluation process on the following occasions/triggers:
   1) UE internal triggers, so as to meet performance as specified in TS 38.133 [8];

Hence, in examples system information may be broadcast in a cell informing UEs whether the cell supports the notification state and how to receive the notification channel if camped on said cell in the notification state. Specifics of such information, e.g. broadcast in a System Information Block (SIB) may be specific in the above-referenced TS *.331 series.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for managing an idle state of a user equipment (300), UE, in an environment covered by a plurality of mobile communication systems (500), the method (10) comprising
conducting (11) a cell selection measurement to obtain one or more cell specific quality measurement results;
if there is a cell specific quality measurement above a first threshold and from a first cell the UE is allowed to register at, registering (12) the UE (300) at said first cell;
else
if there is a cell specific quality measurement above a second threshold, which is lower than the first threshold, and from a second cell the UE (300) is allowed to register at, registering (13) the UE (300) at said second cell with a reduced service set having extended coverage, wherein the reduced service set comprises receiving a notification channel from the cell the UE (300) is registered at, wherein the notification channel indicates that a paging of the UE (300) was missed and/or where regular service can be obtained;
else
if there is a cell specific quality measurement above a third threshold and from a third cell the UE (300) is not allowed to register normally at, registering (14) the UE (300) at said third cell with an emergency service set;
else
repeating (14) the conducting of cell selection measurements to obtain one or more cell specific quality measurement results.

2. The method (10) of claim 1, wherein the method (10) comprises repeating the conducting (11) of cell selection measurements to obtain one or more cell specific quality measurement results also in case the UE (300) is registered with the reduced service set.

3. The method (10) of one of the claims 1 or 2, wherein in case the UE (300) is registered with the reduced service set and an emergency call occurs at the UE (300), the method (10) comprises
if there is a cell specific quality measurement above the third threshold and from the third cell the UE (300) is not allowed to register normally at, registering the UE (300) at said third cell with an emergency service set and conducting the emergency call.

4. The method (10) of one of the claims 1 to 3, wherein the first cell the UE (300) is allowed to register at is a cell of the UE's home public land mobile network, HPLMN, or a cell of a PLMN the UE (300) is allowed to roam to.

5. The method (10) of one of the claims 1 to 4, wherein the first cell the UE (300) is allowed to register at is a suitable cell according to the 3^{rd} Generation Partnership Project Technical Specification 3GPP TS 38.304.

6. The method (10) of one of the claims 1 to 5, wherein the third cell the UE (300) is not allowed to register at is an acceptable cell according to the 3^{rd} Generation Partnership Project Technical Specification 3GPP TS 38.304.

7. The method (10) of one of the claims 1 to 6, wherein the second cell the UE (300) is allowed to register at is a notification cell of the UE's home public land mobile network, HPLMN, or a cell of a PLMN the UE (300) is allowed to roam to.

8. The method (10) of claim 7, wherein the notification cell is a cell on which the UE (300) may camp to obtain a notification service.

9. The method (10) of one of the claims 1 to 8, further comprising receiving, at the UE (300), information on a configuration of a notification channel from at least one cell of a mobile communication system (500).

10. A method for a mobile communication system (500) with a base station (400) and user equipment (300), the method comprising
the method (10) of claim 9 for managing an idle state of the UE (300);
broadcasting (22) by the base station (400) configuration information about a notification channel used for reduced services with extended coverage, wherein the notification channel is configured to indicate that a paging of a UE (300) was missed and/or where regular service can be obtained;
registering (24) user equipment (300), UE, for receiving the notification channel; and
communicating (26) with the UE (300) via the notification channel.

11. A computer program having a program code for performing one of the methods (10; 20) of one of the claims 1 to 10, when the computer program is executed on a computer, a processor, or a programmable hardware component.

12. An apparatus (30) for user equipment (300) of a mobile communication system (500), the apparatus (30) comprising
one or more interfaces (32) configured to communicate in the mobile communication system (500); and
one or more processing devices (34) configured to perform one of the methods (10) of one of the claims 1 to 9.

13. A mobile communication system (500) comprising user equipment (300) with an apparatus (30) according to claim 12 and a base station (400) with an apparatus comprising
one or more interfaces (42) configured to communicate in the mobile communication system (500); and
one or more processing devices (44) configured to perform the base station method steps of claim 10.

## Patentansprüche

1. Ein Verfahren (10) zum Verwalten eines Ruhezustands eines Benutzergeräts (300), UE, in einer Umgebung, die von einer Mehrzahl von Mobilkommunikationssystemen (500) abgedeckt wird, wobei das Verfahren (10) Folgendes umfasst:
Durchführen (11) einer Zellauswahlmessung, um ein oder mehrere zellspezifische Qualitätsmessergebnisse zu erhalten;
wenn es eine zellspezifische Qualitätsmessung über einem ersten Schwellenwert gibt und von einer ersten Zelle, bei der sich das UE registrieren darf, Registrieren (12) des UE (300) bei der ersten Zelle;
ansonsten
wenn es eine zellspezifische Qualitätsmessung über einem zweiten Schwellenwert gibt, der niedriger als der erste Schwellenwert ist, und von einer zweiten Zelle, bei der sich das UE (300) registrieren darf, Registrieren (13) des UE (300) bei der zweiten Zelle mit einem reduzierten Dienstsatz mit erweiterter Abdeckung, wobei der reduzierte Dienstsatz ein Empfangen eines Benachrichtigungskanals von der Zelle umfasst, bei der das UE (300) registriert ist, wobei der Benachrichtigungskanal anzeigt, dass ein Paging des UE (300) verpasst wurde und/oder wo ein regulärer Dienst erhalten werden kann;
ansonsten
wenn es eine zellspezifische Qualitätsmessung über einem dritten Schwellenwert gibt und von einer dritten Zelle, bei der sich das UE (300) nicht normal registrieren darf, Registrieren (14) des UE (300) bei der dritten Zelle mit einem Notfalldienstsatz;
ansonsten
Wiederholen (14) des Durchführens von Zellauswahlmessungen, um ein oder mehrere zellspezifische Qualitätsmessergebnisse zu erhalten.

2. Das Verfahren (10) nach Anspruch 1, wobei das Verfahren (10) ein Wiederholen des Durchführens (11) von Zellauswahlmessungen umfasst, um ein oder mehrere zellspezifische Qualitätsmessergebnisse zu erhalten, auch für den Fall, dass das UE (300) bei dem reduzierten Dienstsatz registriert ist.

3. Das Verfahren (10) nach einem der Ansprüche 1 oder 2, wobei für den Fall, dass das UE (300) bei dem reduzierten Dienstsatz registriert ist und ein Notruf bei dem UE (300) auftritt, das Verfahren (10) Folgendes umfasst:
wenn es eine zellspezifische Qualitätsmessung über dem dritten Schwellenwert gibt und von der dritten Zelle, bei der sich das UE (300) nicht normal registrieren darf, Registrieren des UE (300) bei der dritten Zelle mit einem Notfalldienstsatz und Durchführen des Notrufs.

4. Das Verfahren (10) nach einem der Ansprüche 1 bis 3, wobei die erste Zelle, bei der sich das UE (300) registrieren darf, eine Zelle des Home Public Land Mobile Network, HPLMN, des UE oder eine Zelle eines PLMN ist, zu dem das UE (300) roamen darf.

5. Das Verfahren (10) nach einem der Ansprüche 1 bis 4, wobei die erste Zelle, bei der sich das UE (300) registrieren darf, eine geeignete Zelle gemäß der 3^{rd} Generation Partnership Project Technical Specification 3GPP TS 38.304 ist.

6. Das Verfahren (10) nach einem der Ansprüche 1 bis 5, wobei die dritte Zelle, bei der sich das UE (300) nicht registrieren darf, eine akzeptable Zelle gemäß der 3^{rd} Generation Partnership Project Technical Specification 3GPP TS 38.304 ist.

7. Das Verfahren (10) nach einem der Ansprüche 1 bis 6, wobei die zweite Zelle, bei der sich das UE (300) registrieren darf, eine Benachrichtigungszelle des Home Public Land Mobile Network, HPLMN, des UE oder eine Zelle eines PLMN ist, zu dem das UE (300) roamen darf.

8. Das Verfahren (10) nach Anspruch 7, wobei die Benachrichtigungszelle eine Zelle ist, auf der das UE (300) verweilen kann, um einen Benachrichtigungsdienst zu erhalten.

9. Das Verfahren (10) nach einem der Ansprüche 1 bis 8, ferner umfassend ein Empfangen, an dem UE (300), von Informationen über eine Konfiguration eines Benachrichtigungskanals von mindestens einer Zelle eines Mobilkommunikationssystems (500).

10. Ein Verfahren für ein Mobilkommunikationssystem (500) mit einer Basisstation (400) und einem Benutzergerät (300), wobei das Verfahren Folgendes umfasst:
das Verfahren (10) nach Anspruch 9 zum Verwalten eines Ruhezustands des UE (300);
Rundsenden (22), durch die Basisstation (400), von Konfigurationsinformationen über einen Benachrichtigungskanal, der für reduzierte Dienste mit erweiterter Abdeckung verwendet wird, wobei der Benachrichtigungskanal konfiguriert ist, um anzuzeigen, dass ein Paging eines UE (300) verpasst wurde und/oder wo ein regulärer Dienst erhalten werden kann;
Registrieren (24) des Benutzergeräts (300), UE, zum Empfangen des Benachrichtigungskanals; und
Kommunizieren (26) mit dem UE (300) über den Benachrichtigungskanal.

11. Ein Computerprogramm mit einem Programmcode zum Durchführen eines der Verfahren (10; 20) nach einem der Ansprüche 1 bis 10, wenn das Computerprogramm auf einem Computer, einem Prozessor oder einer programmierbaren Hardwarekomponente ausgeführt wird.

12. Eine Vorrichtung (30) für ein Benutzergerät (300) eines Mobilkommunikationssystems (500), wobei die Vorrichtung (30) Folgendes umfasst:
eine oder mehrere Schnittstellen (32), die konfiguriert sind, um in dem Mobilkommunikationssystem (500) zu kommunizieren; und
eine oder mehrere Verarbeitungsvorrichtungen (34), die konfiguriert sind, um eines der Verfahren (10) nach einem der Ansprüche 1 bis 9 durchzuführen.

13. Ein Mobilkommunikationssystem (500), umfassend ein Benutzergerät (300) mit einer Vorrichtung (30) nach Anspruch 12 und eine Basisstation (400) mit einer Vorrichtung, die Folgendes umfasst:
eine oder mehrere Schnittstellen (42), die konfiguriert sind, um in dem Mobilkommunikationssystem (500) zu kommunizieren; und
eine oder mehrere Verarbeitungsvorrichtungen (44), die konfiguriert sind, um die Basisstationsverfahrensschritte nach Anspruch 10 durchzuführen.

## Revendications

1. Procédé (10) de gestion d'un état inactif d'un équipement utilisateur (300), UE, dans un environnement couvert par une pluralité de systèmes de communication mobile (500), le procédé (10) comprenant le fait de
effectuer (11) une mesure de sélection de cellule pour obtenir un ou plusieurs résultats de mesure de qualité spécifique à la cellule ;
s'il y a une mesure de qualité spécifique à la cellule supérieure à un premier seuil et à partir d'une première cellule auprès de laquelle l'UE est autorisé à s'enregistrer, le fait d'enregistrer (12) l'UE (300) auprès de ladite première cellule ;
sinon
s'il y a une mesure de qualité spécifique à la cellule supérieure à un deuxième seuil, qui est inférieur au premier seuil, et à partir d'une deuxième cellule auprès de laquelle l'UE (300) est autorisé à s'enregistrer, le fait d'enregistrer (13) l'UE (300) auprès de ladite deuxième cellule avec un ensemble de services réduits ayant une couverture étendue, dans lequel l'ensemble de services réduits comprend la réception d'un canal de notification à partir de la cellule auprès de laquelle l'UE (300) est enregistré, dans lequel le canal de notification indique qu'un appel de l'UE (300) a été manqué et/ou où un service régulier peut être obtenu ;
sinon
s'il y a une mesure de qualité spécifique à la cellule supérieure à un troisième seuil et à partir d'une troisième cellule auprès de laquelle l'UE (300) n'est pas autorisé à s'enregistrer normalement, le fait d'enregistrer (14) l'UE (300) auprès de ladite troisième cellule avec un ensemble de services d'urgence ;
sinon
répéter (14) l'exécution de mesures de sélection de cellule pour obtenir un ou plusieurs résultats de mesure de qualité spécifique à la cellule.

2. Procédé (10) selon la revendication 1, dans lequel le procédé (10) comprend le fait de répéter l'exécution (11) de mesures de sélection de cellule pour obtenir un ou plusieurs résultats de mesure de qualité spécifique à la cellule également dans le cas où l'UE (300) est enregistré avec l'ensemble de services réduits.

3. Procédé (10) selon l'une des revendications 1 ou 2, dans lequel dans le cas où l'UE (300) est enregistré avec l'ensemble de services réduits et où un appel d'urgence se produit auprès de l'UE (300), le procédé (10) comprend
s'il y a une mesure de qualité spécifique à la cellule supérieure au troisième seuil et à partir de la troisième cellule auprès de laquelle l'UE (300) n'est pas autorisé à s'enregistrer normalement, le fait d'enregistrer l'UE (300) auprès de ladite troisième cellule avec un ensemble de services d'urgence et le fait d'effectuer l'appel d'urgence.

4. Procédé (10) selon l'une des revendications 1 à 3, dans lequel la première cellule auprès de laquelle l'UE (300) est autorisé à s'enregistrer est une cellule du réseau mobile terrestre public domestique, HPLMN, de l'UE, ou une cellule d'un PLMN auprès de laquelle l'UE (300) est autorisé à se déplacer.

5. Procédé (10) selon l'une des revendications 1 à 4, dans lequel la première cellule auprès de laquelle l'UE (300) est autorisé à s'enregistrer est une cellule appropriée selon la spécification technique de projet de partenariat de 3^{e} génération, 3GPP TS 38.304.

6. Procédé (10) selon l'une des revendications 1 à 5, dans lequel la troisième cellule auprès de laquelle l'UE (300) n'est pas autorisé à s'enregistrer est une cellule acceptable selon la spécification technique de projet de partenariat de 3^{e} génération, 3GPP TS 38.304.

7. Procédé (10) selon l'une des revendications 1 à 6, dans lequel la deuxième cellule auprès de laquelle l'UE (300) est autorisé à s'enregistrer est une cellule de notification du réseau mobile terrestre public domestique, HPLMN, de l'UE, ou une cellule d'un PLMN auprès de laquelle l'UE (300) est autorisé à se déplacer.

8. Procédé (10) selon la revendication 7, dans lequel la cellule de notification est une cellule sur laquelle l'UE (300) peut camper pour obtenir un service de notification.

9. Procédé (10) selon l'une des revendications 1 à 8, comprenant en outre le fait de recevoir, au niveau de l'UE (300), des informations sur une configuration d'un canal de notification en provenance d'au moins une cellule d'un système de communication mobile (500).

10. Procédé pour un système de communication mobile (500) avec une station de base (400) et un équipement utilisateur (300), le procédé comprenant le fait de
utiliser le procédé (10) selon la revendication 9 pour gérer un état inactif de l'UE (300) ;
diffuser (22), par la station de base (400), des informations de configuration concernant un canal de notification utilisé pour des services réduits avec une couverture étendue, dans lequel le canal de notification est configuré pour indiquer qu'un appel d'un UE (300) a été manqué et/ou où un service régulier peut être obtenu ;
enregistrer (24) un équipement utilisateur (300), UE, pour recevoir le canal de notification ; et
communiquer (26) avec l'UE (300) par l'intermédiaire du canal de notification.

11. Programme informatique ayant un code de programme pour réaliser l'un des procédés (10 ; 20) selon l'une des revendications 1 à 10, lorsque le programme informatique est exécuté sur un ordinateur, un processeur ou un composant matériel programmable.

12. Appareil (30) pour un équipement utilisateur (300) d'un système de communication mobile (500), l'appareil (30) comprenant
une ou plusieurs interfaces (32) configurées pour communiquer dans le système de communication mobile (500) ; et
un ou plusieurs dispositifs de traitement (34) configurés pour réaliser l'un des procédés (10) selon l'une des revendications 1 à 9.

13. Système de communication mobile (500) comprenant un équipement utilisateur (300) avec un appareil (30) selon la revendication 12 et une station de base (400) avec un appareil comprenant
une ou plusieurs interfaces (42) configurées pour communiquer dans le système de communication mobile (500) ; et
un ou plusieurs dispositifs de traitement (44) configurés pour réaliser les étapes de procédé de station de base selon la revendication 10.
